(19) Europäisches Patentamt / European Patent Office / Office européen des brevets

(11) **EP 4 117 224 B1**

(12) **FASCICULE DE BREVET EUROPEEN**

(45) Date de publication et mention de la délivrance du brevet:
**06.09.2023 Bulletin 2023/36**

(21) Numéro de dépôt: **22174930.2**

(22) Date de dépôt: **23.05.2022**

(51) Classification Internationale des Brevets (IPC):
**H04L 9/30** $^{(2006.01)}$

(52) Classification Coopérative des Brevets (CPC):
**H04L 9/3033; H04L 9/302**

(54) **PROCÉDÉ DE GÉNÉRATION D'UN ÉLÉMENT D'UNE CLÉ CRYPTOGRAPHIQUE, PROCÉDÉ DE TRAITEMENT CRYPTOGRAPHIQUE, DISPOSITIF DE TRAITEMENT CRYPTOGRAPHIQUE ET PROGRAMME D'ORDINATEUR ASSOCIÉS**

VERFAHREN ZUR ERZEUGUNG EINES ELEMENTS EINES KRYPTOGRAPHISCHEN SCHLÜSSELS, ENTSPRECHENDES KRYPTOGRAPHISCHES VERARBEITUNGSVERFAHREN, KRYPTOGRAPHISCHES VERARBEITUNGSGERÄT UND COMPUTERPROGRAMM

METHOD FOR GENERATING AN ELEMENT OF A CRYPTOGRAPHIC KEY, ASSOCIATED CRYPTOGRAPHIC PROCESSING METHOD, CRYPTOGRAPHIC PROCESSING DEVICE AND COMPUTER PROGRAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.07.2021 FR 2107278**

(43) Date de publication de la demande:
**11.01.2023 Bulletin 2023/02**

(73) Titulaire: **IDEMIA France**
**92400 Courbevoie (FR)**

(72) Inventeurs:
• **BETTALE, Luk**
**92400 Courbevoie (FR)**
• **GREUET, Aurélien**
**92400 Courbevoie (FR)**
• **RONDEPIERRE, Franck**
**92400 Courbevoie (FR)**

(74) Mandataire: **Idemia**
**2, place Samuel de Champlain**
**92400 Courbevoie (FR)**

(56) Documents cités:
**JP-A- 2013 113 978     US-A1- 2002 174 155
US-A1- 2020 044 861**

**Description**

DOMAINE TECHNIQUE DE L'INVENTION

La présente invention concerne de manière générale le domaine du traitement cryptographique utilisant l'arithmétique modulaire.

Elle concerne plus particulièrement un procédé de génération d'un élément d'une clé cryptographique, un procédé de traitement cryptographique, un dispositif de traitement cryptographique et un programme d'ordinateur associés.

ETAT DE LA TECHNIQUE

Certains protocoles de cryptographie (en particulier de cryptographie asymétrique), tels que le protocole RSA, utilisent les principes de l'arithmétique modulaire. La génération de clés cryptographiques, présentant des éléments publics et privés, est nécessaire préalablement au chiffrement de messages. Les éléments privés doivent être choisis calculatoirement impossibles à retrouver à partir des éléments publics.

Des algorithmes de génération de clés RSA peuvent être trouvés par exemple dans « Information Technology Laboratory National Institute of Standards and technology. Digital Signature Standard (DSS). Technical Report », in FEDERAL INFORMATION PROCESSING STANDARDS PUBLICATION, July 2013. La demande de brevet US 2020/044861 A1 expose la génération d'une signature cryptographique composée à l'aide d'un calcul itératif de restes modulaires. Les demandes de brevets US 2002/174155 A1 et JP 2013113978 A exposent de l'arrière-plan technologique au sujet du calcul optimisé du plus grand facteur commun dans le contexte de la génération de clés cryptographiques.

Parmi les algorithmes du document ci-dessus, concernant la génération des éléments privés, l'un consiste à énumérer des nombres candidats en incrémentant un nombre initial jusqu'à obtenir un résultat satisfaisant des conditions avec l'un des éléments publics de la clé cryptographique à générer, dit exposant public. Lors de l'évaluation de chaque nombre candidat, des calculs de plus grands dénominateurs communs sont effectués, qui impactent les performances de la génération de clés.

Il est connu d'effectuer une opération de tamisage visant à éliminer lors de l'énumération certains nombres candidats par l'utilisation d'une base de nombres premiers. Cependant, malgré cette opération, demeurent la difficulté et le volume de calculs sollicités lors de la génération des éléments privés, en particulier la vérification que le plus grand dénominateur commun de la différence entre le nombre candidat et 1 et de l'exposant public est égal à 1.

PRESENTATION DE L'INVENTION

Dans ce contexte, la présente invention propose un procédé de génération d'un élément d'une clé cryptographique, la clé cryptographique comprenant également un exposant public, dans lequel :

- le procédé comprend l'application d'itérations successives, jusqu'à ce qu'au moins le plus grand dénominateur commun de la différence entre une variable et 1, et de l'exposant public soit égal à 1, dans lequel
- chaque itération comprend la détermination d'une pluralité de restes modulaires associés chacun à un nombre premier d'une base d'une pluralité de nombres premiers pi, lesdits restes modulaires étant égaux respectivement au reste de la variable modulo le nombre premier associé, et
- l'élément généré est la valeur de la variable lors de la dernière itération, caractérisé en ce que le procédé comprend, antérieurement aux itérations successives, la détermination des nombres premiers de la base facteurs de l'exposant public, et en ce que le procédé contourne une étape de calcul du plus grand dénominateur commun de la différence entre la variable et 1, et de l'exposant public lorsque, lors d'une desdites itérations, au moins un parmi la pluralité de restes modulaires associés auxdits nombres premiers déterminés est égal à 1.

Autrement dit, lorsque, lors d'une desdites itérations, au moins un parmi la pluralité de restes modulaires associés auxdits nombres premiers déterminés est égal à 1, l'étape de calcul du plus grand dénominateur commun n'est pas mise oeuvre pour cette itération.

Le procédé de génération selon l'invention permet ainsi de diminuer le nombre de calculs de plus grand dénominateur commun effectués. Ainsi grâce à l'invention, le procédé de génération d'un ou plusieurs éléments d'une clé cryptographique présente un volume de calculs et donc un temps de calcul réduits.

Lorsque, lors d'une desdites itérations, aucun parmi la pluralité des restes modulaires associés auxdits nombres premiers déterminés n'est égal à 1, l'itération comprend en revanche la mise en oeuvre du calcul du plus grand dénominateur commun de la différence entre la variable et 1, et de l'exposant public.

D'autres caractéristiques avantageuses et non limitatives du procédé conforme à l'invention, prises individuellement ou selon toutes les combinaisons techniquement possibles, sont les suivantes :

- l'élément de la clé cryptographique est généré et égal à la valeur de la variable correspondant à la dernière itération si la valeur de la variable est un nombre premier,
- les nombres premiers de la base sont référencés chacun par un indice et les indices des nombres premiers déterminés sont mémorisés dans un ensemble,

- le procédé comprend en outre, antérieurement aux itérations successives, la détermination d'un nombre résiduel égal à 1 si l'ensemble des facteurs premiers de l'exposant public correspondent aux nombres premiers déterminés, ou, sinon, égal à un facteur de l'exposant public qui est premier avec chacun des nombres premiers de l'ensemble,
- lorsque le nombre résiduel est égal à un facteur de l'exposant public et est premier avec chacun des nombres premiers de l'ensemble et que le nombre résiduel est inférieur à une borne supérieure, le nombre résiduel est ajouté à la base,
- lorsque le nombre résiduel est premier, le procédé comprend une étape d'affectation de la valeur 1 au nombre résiduel,
- lors d'une desdites itérations, lorsque tous les restes modulaires associés aux nombres premiers facteurs de l'exposant public dans la base sont différents de 1 et lorsque le nombre résiduel est égal à 1, le procédé contourne un calcul du plus grand dénominateur commun de la différence entre la variable et 1, et de l'exposant public,
- la détermination des nombres premiers facteurs de l'exposant public dans la base consiste au calcul de réductions modulaires de l'exposant public modulo pour chaque nombre premier de la base et à la comparaison du reste desdites réductions modulaires avec 0,
- la variable est mise à jour à chaque itération,
- à chaque itération, la variable est incrémentée d'un incrément,
- lors de certaines au moins desdites itérations, la détermination d'une pluralité de restes modulaires consiste en l'affectation, au reste modulaire courant, de la somme du reste modulaire courant et du reste de l'incrément par le nombre premier associé,
- le procédé comprend, antérieurement aux itérations successives, une étape d'initialisation de la variable à une valeur aléatoire.
- le procédé est un procédé de génération d'un premier élément et d'un second élément d'une clé cryptographique.

L'invention propose également un procédé de traitement cryptographique comprenant un procédé de génération d'un élément d'une clé cryptographique tel que défini précédemment. Le procédé de traitement cryptographique selon l'invention peut comprendre une étape d'application, à des données, d'un algorithme cryptographique utilisant l'élément généré ou les éléments générés.

L'invention propose également un programme d'ordinateur comprenant des instructions exécutables par un processeur et adaptées pour la mise en oeuvre d'un procédé de génération ou de traitement cryptographique tel que défini précédemment, lorsque ces instructions sont exécutées par le processeur.

L'invention propose aussi un dispositif de traitement cryptographique, comprenant une unité de génération d'un élément d'une clé cryptographique comprenant également un exposant public, dans lequel :

- l'unité de génération est conçue pour appliquer des itérations successives, de manière à ce qu'au moins le plus grand dénominateur commun de la différence entre une variable et 1 et de l'exposant public soit égal à 1,
- l'unité de génération est également conçue pour activer, à chaque itération, un bloc de détermination d'une pluralité de restes modulaires associés chacun à un nombre premier d'une base d'une pluralité de nombre premiers, de telle sorte que lesdits restes modulaires sont égaux respectivement au reste de la variable modulo le nombre premier associé,
- l'unité de génération est aussi conçue pour générer la valeur de la variable correspondant à la dernière itération en tant que l'élément à générer,
- l'unité de génération comprend un bloc de calcul du plus grand dénominateur commun de la différence entre la variable et 1 et de l'exposant public,

le dispositif étant caractérisé en ce que l'unité de génération est conçue pour activer, antérieurement auxdites itérations successives, un bloc de détermination des nombres premiers facteurs de l'exposant public dans la base, et en ce que l'unité est conçue pour désactiver le bloc de calcul du plus grand dénominateur commun lors de chaque itération, où un parmi la pluralité de restes modulaires associés aux nombres premiers déterminés est égal à 1.

Ce dispositif de traitement cryptographique peut être configuré pour la mise en oeuvre de chacune des possibilités de réalisation envisagées pour le procédé de génération ou de traitement cryptographique tel que défini précédemment.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 représente schématiquement les éléments principaux d'une entité électronique au sein de laquelle est mise en oeuvre l'invention ;
- la figure 2 représente, sous forme de logigramme un exemple de procédé de génération d'un élément ou de plusieurs éléments d'une clé cryptographique selon l'invention ;
- la figure 3 représente une partie du procédé de la figure 2 ;
- la figure 4 représente une partie optionnelle du procédé de la figure 2 ; et
- la figure 5 représente une partie de la partie de procédé de la figure 3.

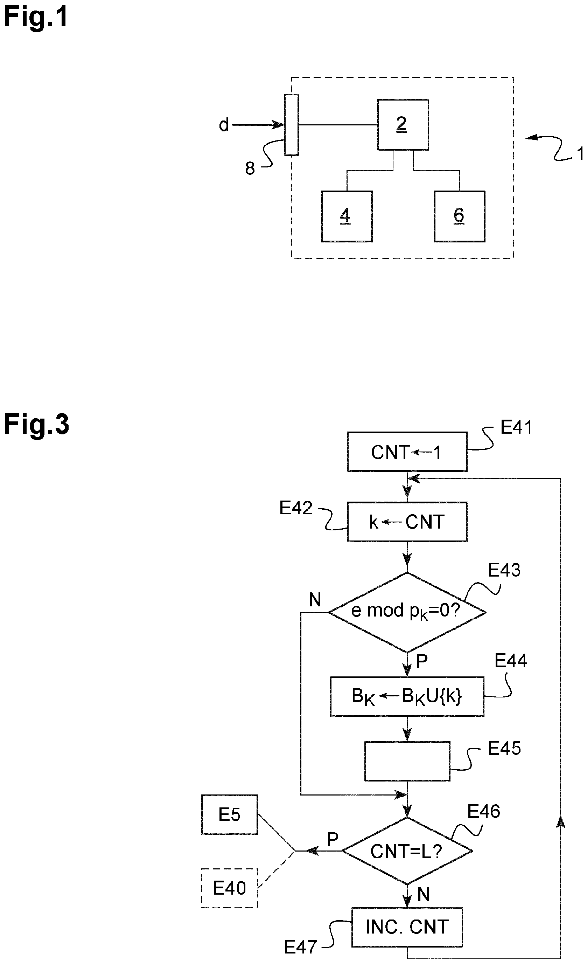

La figure 1 représente schématiquement les éléments principaux d'une entité électronique 1 au sein de laquelle est mise en oeuvre l'invention.

L'entité électronique 1 est par exemple une carte à microcircuit, telle qu'une carte à circuit intégré universelle (ou UICC pour *"Universal Integrated Circuit Card")* ou une carte bancaire. Sous cette forme ou sous une des autres formes envisageables comme indiqué ci-dessous, la première entité électronique 1 peut former un document électronique d'identité.

Selon une autre possibilité de réalisation, l'entité électronique 1 pourrait être un élément sécurisé (ou SE pour *"Secure Element")* - par exemple un microcontrôleur sécurisé ; un tel élément sécurisé est par exemple intégré à un dispositif électronique portatif (ou *"hand-held electronic device"* selon l'appellation anglo-saxonne), tel qu'un terminal de communication ou un passeport électronique. Selon une autre variante encore, l'entité électronique 1 pourrait être un ordinateur ou un module matériel de sécurité (ou HSM pour *"Hardware Security Module")*.

L'entité électronique 1 comprend un processeur 2 (ici un microprocesseur), une mémoire vive 4 et une mémoire non-volatile réinscriptible 6 (par exemple de type EEPROM pour *"Electrically Erasable and Programmable Read-Only Memory"*). L'entité électronique 1 pourrait éventuellement comprendre en outre une mémoire morte. La mémoire vive 4 et la mémoire non-volatile réinscriptible 6 (ainsi que le cas échéant la mémoire morte) sont chacune liées au processeur 2 de sorte que le processeur 2 peut lire ou écrire des données dans chacune de ces mémoires 4, 6.

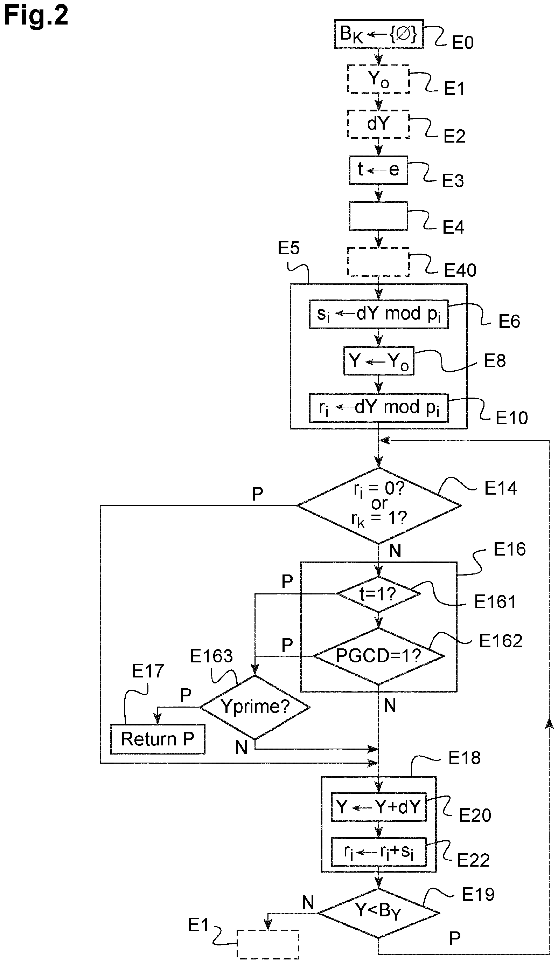

Une de ces mémoires, par exemple la mémoire non-volatile réinscriptible 6, mémorise des instructions de programme d'ordinateur, dont certaines permettent la mise en oeuvre par l'entité électronique 1 d'étapes du procédé décrit ci-dessous en référence à la figure 2, lorsque ces instructions sont exécutées par le processeur 2.

Les mémoires 4, 6 stockent également des données représentatives de valeurs utilisées lors de la mise en oeuvre de ces étapes.

L'entité électronique 1 est conçue (ici grâce à certaines des instructions mémorisées dans une mémoire 4, 6 de l'entité électronique 1 et exécutables par le processeur 2 de l'entité électronique 1) pour mettre en oeuvre un procédé de génération d'un ou plusieurs éléments p, q d'une clé cryptographique, par exemple dans le cadre d'un schéma de chiffrement asymétrique (tel que RSA). Le procédé de génération peut être inclus dans un procédé de traitement cryptographique. Un tel procédé de traitement cryptographique peut comprendre une étape d'application, à des données, d'un algorithme cryptographique utilisant l'élément p ou les éléments p, q générés par le procédé de génération selon l'invention. Par exemple, il peut d'agir d'un algorithme de déchiffrement de données utilisant l'élément p ou les éléments p, q. Dans un autre exemple, l'algorithme peut être un algorithme de signature d'un ensemble de données, la signature utilisant l'élément p ou les éléments p, q. L'entité électronique 1 est dans ce cas un dispositif de traitement cryptographique.

L'entité électronique 1 comprend en outre une interface de communication 8 avec des dispositifs électroniques externes. Dans le cas décrit ici où l'entité électronique 1 est une carte à microcircuit, l'interface de communication 8 comprend par exemple des contacts affleurant sur une face de la carte à microcircuit. En variante, l'interface de communication 8 pourrait être réalisée par un module de communication sans contact. De manière générale, l'interface de communication 8 peut être un module de communication (filaire ou sans fil) avec une autre entité électronique.

Dans certains modes de réalisation, le processeur 2 peut ainsi recevoir des données d de l'autre entité électronique via l'interface de communication 8 (par exemple, en vue de l'application de l'algorithme cryptographique à ces données d) et/ou émettre d'autres données, par exemple un résultat d'application de l'algorithme cryptographique précité, à destination de l'autre entité électronique via l'interface de communication 8.

Dans d'autres modes de réalisation, le résultat d'application de l'algorithme cryptographique précité est mémorisé dans une mémoire, par exemple la mémoire non-volatile réinscriptible 6, de l'entité électronique 1.

La figure 2 représente, sous forme de logigramme, un exemple de procédé de génération d'un élément d'une clé cryptographique conforme à l'invention. Le mode de réalisation décrit ci-après se situe dans le contexte où l'algorithme cryptographique précité est un algorithme de génération de clés, notamment dans un schéma de chiffrement asymétrique (tel que RSA).

La mémoire non-volatile réinscriptible 6 mémorise en particulier un exposant public e prédéfini et connu de la clé cryptographique. Le ou les éléments p, q obtenus chacun par le procédé de génération décrit ci-après sont des facteurs secrets du module RSA.

Le ou les éléments p, q, doivent remplir deux conditions. La première condition est que le ou les éléments p, q, doivent être des nombres premiers. La seconde condition est que le nombre p-1, respectivement, le nombre q-1, soit premier avec l'exposant public e. Autrement dit, le plus grand dénominateur commun de p-1 et e, et/ou le plus grand dénominateur commun de q-1 et e, doivent être égaux à 1. Toutefois, l'invention ne s'applique pas que dans ce cas, mais également dès lors qu'un élément d'une clé cryptographique doit vérifier la condition selon laquelle le nombre p-1, respectivement, le nombre q-1, est premier avec l'exposant public e.

La mémoire non-volatile réinscriptible 6 mémorise également une base B comprenant un nombre entier L de nombres premiers $\{p_i\}_{i=1..L}$ référencés par un indice i, i étant un nombre entier compris entre 1 et L, qui seront utilisés lors du procédé de génération de l'élément p ou q.

La mémoire vive 4 mémorise par ailleurs une valeur initiale $Y_0$. Par exemple, la valeur initiale $Y_0$ peut être tirée aléatoirement par le processeur 2, par exemple au début du procédé de la figure 2, lors d'une étape E1, et présenter une taille prédéterminée, par exemple une taille de N bits. La valeur initiale $Y_0$ sera alors inférieure à une borne $B_Y$ égale à $2^N$ (cette borne $B_Y$ pouvant en outre être mémorisée dans la mémoire non-volatile 6 pour utilisation ultérieure). Dans un exemple plus concret, si la valeur initiale $Y_0$ est un nombre de taille 1024 bits tiré aléatoirement, alors la valeur initiale $Y_0$ sera inférieure à $2^{1024}$.

En variante, la valeur initiale $Y_0$ peut être choisie de sorte à être inférieure à une borne $B_Y$ prédéterminée (et dans ce cas la borne $B_Y$ est par exemple mémorisée dans la mémoire non-volatile 6). Si la valeur initiale $Y_0$ est supérieure à la borne $B_Y$, des tirages aléatoires successifs sont réalisés jusqu'à ce que la valeur $Y_0$ obtenue soit inférieure à la borne $B_Y$.

Selon une variante envisageable, la borne $B_Y$ pourrait être déterminée (au début du procédé de la figure 2, par exemple à l'étape E0) par tirage aléatoire, par exemple au sein d'une plage de valeurs prédéterminée.

La mémoire non-volatile réinscriptible 6 mémorise également un incrément dY. Par exemple, l'incrément dY peut être une valeur tirée aléatoirement par le processeur au début du procédé de la figure 2, lors d'une étape E2.

Le procédé selon l'invention débute à l'étape E0 lors de laquelle le processeur 2 alloue un espace mémoire dans la mémoire vive 4 destiné à mémoriser un ensemble $B_K$ d'indices.

Le processeur 2 initialise ensuite à l'étape E3 un nombre résiduel t à la valeur de l'exposant public e. Le nombre résiduel t est par exemple mémorisé dans la mémoire vive 4.

Il est à noter que l'étape les étapes E0 et E3, E1 et E2 peuvent être exécutées dans un ordre arbitraire.

Le processeur 2 met ensuite en oeuvre une étape E4 visant à déterminer les facteurs de l'exposant public e parmi les nombres premiers $\{p_i\}_{i=1..L}$ et à affecter une nouvelle valeur au nombre résiduel t.

Comme décrit ci-après en référence à la figure 3, l'étape E4 utilise une boucle mettant en oeuvre plusieurs itérations, tant que la valeur d'un compteur CNT est inférieure au nombre L de nombres premiers $\{p_i\}_{i=1..L}$ de la base B, afin d'éventuellement mémoriser dans l'ensemble d'indices $B_K$ des indices k référençant des nombres premiers $p_k$ de la base B déterminés comme étant facteurs de l'exposant public e, et afin d'éventuellement affecter une nouvelle valeur au nombre résiduel t.

L'étape E4 commence par une étape E41 d'initialisation d'un compteur CNT à la valeur 1. Puis, lors d'une étape E42, le processeur 2 affecte à une variable k la valeur CNT. Dans une étape E43, le processeur 2 détermine si le nombre premier $p_k$ associé à l'indice k est un facteur de l'exposant public e. Par exemple, le processeur 2 calcule une réduction modulaire de l'exposant public e modulo le nombre premier $p_k$. Puis, le processeur 2 compare le reste modulaire de la réduction modulaire avec 0. Si ce reste modulaire est égal à 0, le nombre premier $p_k$ est facteur premier de l'exposant public e. Sinon, le nombre premier $p_k$ n'est pas facteur premier de l'exposant public e.

Si le résultat de l'étape E43 est négatif (flèche N), le procédé passe directement à l'étape E46 décrite ci-après.

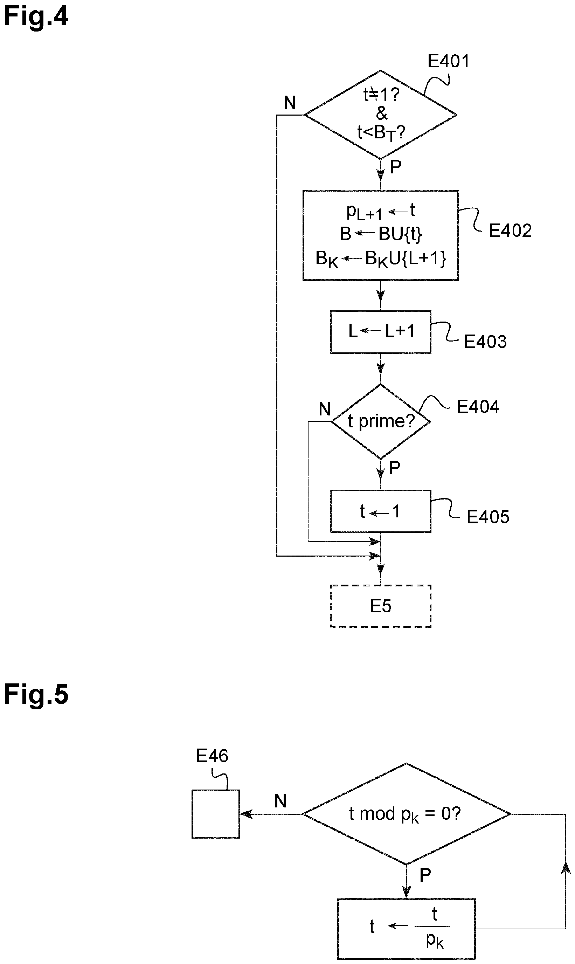

Si, au contraire, à l'étape E43, le processeur détermine que le nombre premier $p_k$ est un facteur premier de l'exposant public e (flèche P), il ajoute lors d'une étape E44 la valeur de la variable k à l'ensemble d'indices $B_K$. Puis, le processeur 2 exécute une étape E45, illustrée à la figure 5. L'étape E45 est une sous-boucle dans laquelle le processeur 2 entre afin de mettre en oeuvre une série de sous-itérations. Lors de chaque sous-itération, le processeur 2 calcule le reste modulaire $r_{tk}$ de la valeur du nombre résiduel t modulo $p_k$. Si le reste modulaire $r_{tk}$ est nul, le processeur 2 met à jour le nombre résiduel t en lui affectant le quotient de la valeur courante du nombre résiduel t par le nombre premier $p_k$. La sous-boucle se poursuit tant que le reste modulaire $rt_k$ est égal à 0. Dès que le reste modulaire $r_{tk}$ d'une des sous-itérations est différent de 0, le procédé sort de la sous-boucle et continue à l'étape E46 décrite ci-après.

A ce moment, lors de l'étape E46, le processeur 2 détermine si le compteur CNT est égal à L. Dans le cas positif (flèche P), le procédé sort de la boucle et l'étape E4 est terminée. Dans le cas négatif (flèche N), le processeur 2 incrémente de 1 le compteur CNT lors d'une étape E47 et le procédé retourne à l'étape E42 .

A l'issue de l'étape 4, l'ensemble $B_K$ peut comprendre un ensemble d'indices k, et le nombre résiduel t a été éventuellement mis à jour. Plus précisément, l'ensemble $B_K$ d'indices k correspond aux indices des nombres premiers $p_k$ de la base B déterminés comme étant facteurs de l'exposant public e. Le nombre résiduel t, quant à lui, est le nombre tel que

$$e = \prod_{k \in B_K} p_k^{\alpha_k} \, t \qquad (1),$$

où $\alpha_k$ est un nombre entier non nul pour tout indice k dans $B_K$ et où aucun des nombres premiers $p_k$ ne divise le nombre résiduel t.

Avantageusement, une étape optionnelle E40, décrite plus loin, peut être effectuée à l'issue de l'étape E4 et avant l'exécution d'un ensemble E5 d'étapes. Cette étape optionnelle E40 permet d'augmenter le nombre potentiel de contournements de la deuxième sous-étape E162, c'est-à-dire, du calcul du plus grand dénominateur commun de la différence de la valeur courante de la variable et 1 et de l'exposant public e lors des itérations comprises dans le procédé.

Lorsqu'il est prévu d'exécuter l'étape optionnelle E40, le procédé inclut lorsqu'il débute, par exemple avant l'étape E4 ou avant l'étape E40, la mémorisation dans une variable de la valeur L, qui est le nombre de nombres premiers dans la base B.

Suite à l'étape E4 ou à l'étape optionnelle E40, le procédé met en oeuvre l'ensemble E5 d'étapes E6, E8 et E10.

Lors de l'étape E6, le processeur initialise un ensemble d'incréments $\{s_i\}_{i=1..L}$.

Le processeur 2 calcule pour chaque indice i compris entre 1 et L le reste modulaire de l'incrément dY modulo le nombre premier $p_i$ de la base B associé à l'indice i et affecte ensuite ce reste modulaire à l'incrément $s_i$. Les incréments $\{s_i\}_{i=1..L}$ sont par exemple mémorisés dans la mémoire vive 4.

Puis, lors d'une étape E8, le processeur 2 initialise une variable Y en lui affectant la valeur initiale $Y_0$. La variable Y est par exemple mémorisée dans la mémoire vive 4.

Les étapes E6 et E8 peuvent être réalisées dans un ordre arbitraire.

Le processeur 2 continue ensuite à l'étape E10 avec l'initialisation d'un ensemble de restes modulaires $\{r_i\}_{i=1..L}$ associés chacun au nombre premier $\{p_i\}_{i=1..L}$ de la base B portant le même indice i. Le processeur 2 calcule, pour chaque indice i compris entre 1 et L, le reste modulaire de la variable Y modulo le nombre premier $p_i$ associé à l'indice i et affecte ensuite ce reste modulaire au reste modulaire $r_i$. Les restes modulaires $\{r_i\}_{i=1..L}$ sont par exemple mémorisés dans la mémoire vive 4.

Par exemple, les étapes E6 et E10 peuvent être effectuées dans une boucle comportant L itérations ou dans deux boucles séparées comportant chacune L itérations.

Après l'étape E10, le procédé entre dans une boucle principale (à l'étape E14) afin d'appliquer des itérations successives tant que la valeur de la variable Y reste inférieure à la borne $B_Y$ et jusqu'à ce qu'au moins le plus grand dénominateur commun de la différence entre la variable Y et 1, et de l'exposant public e soit égal à 1. A chaque itération, la variable Y est mise à jour comme expliqué ci-dessous.

Chacune des itérations de la boucle principale commence ainsi à l'étape E14. Lors de cette étape, le processeur 2 détermine si l'un parmi les restes modulaires $\{r_i\}_{i=1..L}$ est égal à 0, ou s'il existe un indice k parmi les indices de l'ensemble d'indices $B_K$ (dans le cas où l'ensemble d'indices $B_K$ n'est pas vide) correspondant à un reste modulaire $r_k$ égal à 1.

Dans le cas positif (flèche P), le procédé saute directement à l'étape E18 décrite plus loin.

En effet, si un reste modulaire $r_j$ parmi les restes modulaires $\{r_i\}_{i=1..L}$ est égal à 0, alors la valeur de la variable Y est un multiple du nombre premier $p_j$. La valeur de la variable Y n'est donc pas un nombre premier, et par conséquent cette valeur ne répond pas à la première condition sur l'élément p (ou l'élément q) à générer. Le procédé peut ainsi contourner une étape E16 décrite plus loin et incluant un calcul de plus grand dénominateur commun de la différence entre la valeur de la variable Y et 1 et l'exposant public e,.

Par ailleurs, s'il existe un indice k parmi les indices de l'ensemble d'indices $B_K$ (dans le cas où l'ensemble d'indices $B_K$ n'est pas vide) correspondant à un reste modulaire rk égal à 1, alors la différence entre la valeur de la variable Y et 1 n'est pas un nombre premier avec l'exposant public e. Autrement dit : PGCD(Y-1,e) ≠1, où la notation PGCD désigne le plus grand dénominateur commun. Par conséquent, la valeur de la variable Y ne répond pas à la seconde condition sur l'élément p (ou l'élément q) à générer.

En effet, il peut être démontré que, considérant un nombre composite a, c'est-à-dire égal au produit de puissances de facteurs premiers, et un autre nombre b, alors, la différence entre le nombre b et 1 est un nombre premier avec le nombre composite a si et seulement si tous les restes modulaires du nombre b modulo chaque facteur premier de a sont différents de 1. Ainsi, si l'un des restes modulaires du nombre b modulo l'un des facteurs premiers de a est égal à 1, la différence entre le nombre b et 1 n'est pas un nombre premier avec le nombre composite a. Autrement dit : PGCD (b-1,a)≠1.

En effet, si l'un des restes modulaires du nombre b modulo un facteur premier $a_j$ de a est égal à 1, alors b mod $a_j$ =1, c'est-à-dire que b-1 mod $a_j$ =0. Ceci montre que $a_j$ est facteur premier de b-1, donc que b-1 et a ne sont pas premiers entre eux, ou encore que PGCD (b-1,a) ≠1.

Dans ce cas où il existe un indice k parmi les indices de l'ensemble d'indices $B_K$ (lorsque l'ensemble d'indices $B_K$ n'est pas vide) correspondant à un reste modulaire $r_k$ égal à 1, le procédé peut ainsi contourner l'étape E16 décrite ci-après et incluant un calcul de plus grand dénominateur commun de la différence entre la valeur de la variable Y et 1 et l'exposant public e. En effet, dans ce cas, la valeur courante de la variable Y ne remplit pas la seconde condition que doit remplir l'élément p à générer selon laquelle PGCD(p-1,e)=1. Le procédé passe ainsi directement à l'étape E18.

Dans le cas où, à l'étape E14, la détermination du processeur 2 fournit un résultat négatif (flèche N), c'est-à-dire que les tests effectués n'ont pas disqualifié la valeur courante de la variable Y pour être utilisée comme l'élément p ou l'un des éléments p,q à générer, le procédé passe à une étape E16 comprenant une première sous-étape E161 et une deuxième sous-étape E162. Dans une première sous-étape E161, le processeur détermine si le nombre résiduel t est égal à 1. Dans le cas positif (flèche P), le procédé contourne une deuxième sous-étape 162 décrite ci-dessous et consistant en un calcul de plus grand dénominateur commun.

En effet, le résultat positif obtenu à la première sous-étape E161 implique que la différence entre la valeur de la variable Y courante et 1 est un nombre premier avec l'exposant public e, donc que le plus grand dénominateur commun de cette différence et de l'exposant public e est égal à 1. Ainsi, la valeur courante de la variable Y satisfait la deuxième condition que doit satisfaire l'élément p ou les éléments p, q.

En effet, si le nombre résiduel t est égal à 1, alors l'exposant public e se compose exclusivement de facteurs premiers, les dits facteurs premiers étant les nombres premiers $p_k$ dont l'indice k est parmi les indices de l'ensemble d'indices $B_K$. Or, le résultat négatif obtenu à l'étape 14 pour accéder à la première sous-étape E161 implique que pour aucun indice k dans $B_K$, le reste modulaire $r_k$ de Y par $p_k$ n'est égal à 1. D'après la propriété précédemment démontrée, cela implique que PGCD(Y-1,e)=1, autrement dit que Y-1 et e sont premiers entre eux.

Dans ce cas où le résultat de la première sous-étape E161 est positif (flèche P), le processeur 2 détermine lors d'une sous-étape supplémentaire E163 si la valeur de la variable Y est un nombre premier, par exemple par une succession de tests Miller Rabin. On notera que cette succession de tests est allégée grâce à l'utilisation de la base B de nombres premiers. Dans le cas positif (flèche P), le processeur génère lors d'une étape E17 l'élément p recherché de la clé cryptographique en retournant la valeur de la variable Y. L'itération courante est alors la dernière itération et le procédé se termine à cette dernière itération. Dans le cas négatif (flèche N), le procédé se poursuit à l'étape 18 décrite ci-dessous.

Si le résultat de la première sous-étape E161 est négatif (flèche N), le procédé continue en une deuxième sous-étape E162, lors de laquelle le processeur 2 calcule le plus grand dénominateur d commun de la différence entre la valeur de la variable Y et 1 avec l'exposant public e. Le processeur détermine alors si d est égal à 1. Dans le cas positif (flèche P), le processeur 2 poursuit à la sous-étape supplémentaire E163 et détermine si la valeur de la variable Y est un nombre premier. Si tel est le cas (flèche P), le processeur génère lors de l'étape E17 l'élément p recherché de la clé cryptographique en retournant la valeur de la variable Y. L'itération courante est alors la dernière itération et le procédé se termine à cette dernière itération. Le procédé comprend ainsi une succession d'itérations et l'ensemble des itérations se termine à la dernière itération décrite ci-dessus. Sinon (flèche N), le procédé se poursuite à l'étape E18 décrite ci-dessous.

L'étape E18 comprend deux sous-étapes E20 et E22.

Lors de la sous-étape E20, le processeur 2 met à jour la valeur de la variable Y en l'incrémentant de l'incrément dY. Suite à la sous-étape E20 est exécutée une sous-étape E22 visant à mettre à jour les restes modulaires $\{r_i\}_{i=1..L}$.

Lors de la sous-étape E22, le processeur 2 calcule, pour chaque indice i compris entre 1 et L, la somme du reste modulaire $r_i$ et de l'incrément $s_i$ et affecte ensuite cette somme au reste modulaire $r_i$. Du fait de la définition de l'incrément $s_i$, le reste modulaire $r_i$ mis à jour est ainsi égal au reste de la variable Y mise à jour modulo ledit nombre premier $p_i$ associé.

Les sous-étapes E20 et E22 peuvent être exécutées dans un ordre arbitraire.

A l'issue de l'étape E18 , le processeur 2 détermine si la valeur de la variable Y est inférieure à la borne $B_Y$.

Dans le cas négatif (flèche N), la boucle principale est arrêtée et le procédé reprend par la génération d'une nouvelle valeur initiale $Y_0$, par exemple tirée aléatoirement en retournant à l'étape E1.

Dans le cas positif (flèche P), le procédé commence une nouvelle itération de la boucle principale, en retournant à l'étape E14.

On décrit à présent en référence à la figure 4 l'étape optionnelle E40 mentionnée plus haut. Lors de cette étape optionnelle E40, le processeur détermine lors d'une sous-étape E401 si la valeur du nombre résiduel t issu de l'étape E4 est différente de 1 et si cette valeur est inférieure à une borne $B_T$.

Dans le cas positif (flèche P), le processeur 2 affecte lors d'une étape E402 à une variable $p_{L+1}$ la valeur du nombre résiduel t et le nombre résiduel t est ajouté à la base B. L'indice L+1 est également ajouté à l'ensemble $B_K$. On notera que dans ce cas, le nombre résiduel t est égal à un facteur de l'exposant public e.

Lors d'une étape 403, la valeur L+1 est affectée à la variable L.

Suite à l'exécution de l'étape E403, le processeur 2 détermine lors d'une étape 404 si la valeur du nombre résiduel t est un nombre premier, par exemple par une succession de tests Miller Rabin. Dans le cas négatif (flèche N), l'étape E40 est terminée. Dans le cas positif (flèche P), le processeur 2 affecte la valeur 1 au nombre résiduel t lors d'une étape 405 et l'étape 40 est terminée

On peut remarquer que si la valeur du nombre résiduel t est un nombre premier, alors cette valeur est un facteur premier de l'exposant public e. Ceci découle de la définition du nombre résiduel t, à l'équation (1) où l'exposant public e s'écrit comme le produit d'un produit de puissances de facteurs premiers $p_k^{\alpha k}$ par le nombre résiduel t.

Si le résultat de la sous-étape E401 est négatif (flèche N), le procédé saute directement à l'étape E5.

A l'issue de l'étape E40, le procédé reprend son exécution à partir de l'ensemble E5 des étapes E6, E8 et E10.

Par l'affectation de la valeur 1 au nombre résiduel t, après que la valeur de ce nombre résiduel t a été déterminée comme étant un nombre premier à l'étape E413, le nombre de cas où le résultat de la première sous-étape E161 est positif est augmenté, ce qui permet de contourner l'étape E162 de calcul de plus grand dénominateur commun.

Le procédé précédemment décrit peut être exécuté par exemple deux fois, afin de générer un premier élément p d'une clé cryptographique et un deuxième élément q d'une clé cryptographique.

Le procédé de génération d'un élément p, ou de plusieurs éléments p, q précédemment décrit peut être intégré à un procédé de traitement cryptographique.

Un tel procédé de traitement cryptographique peut comprendre une étape d'application à des données d'un algorithme cryptographique utilisant l'élément p ou les éléments p, q générés chacun selon le procédé de génération précédemment décrit.

Ainsi, le procédé de génération d'un élément p ou de plusieurs éléments p, q permet de diminuer le nombre de calculs de plus grand dénominateur commun souvent nécessaires dans le cadre de la génération de clés cryptographiques, notamment dans le contexte d'un schéma de chiffrement asymétrique (tel que RSA).

Variantes

La présente invention est définie par l'objet des revendications indépendantes, l'objet des revendications dépendantes représentant des modes de réalisation préférés.

**Revendications**

1. Procédé de génération d'un élément (p) d'une clé cryptographique, ledit procédé étant mis en oeuvre par une entité électronique (1), ladite clé cryptographique comprenant également un exposant public (e), dans lequel :

   - le procédé comprend l'application d'itérations successives, jusqu'à ce qu'au moins le plus grand dénominateur commun de la différence entre une variable (Y) et 1, et de l'exposant public (e) soit égal à 1, dans lequel
   - chaque itération comprend la détermination d'une pluralité de restes modulaires ($r_i$) associés chacun à un nombre premier ($p_i$) d'une base (B) d'une pluralité de nombres premiers ($p_i$), lesdits restes modulaires ($r_i$) étant égaux respectivement au reste de la variable (Y) modulo ledit nombre premier ($p_i$) associé, et dans lequel
   - l'élément (p) généré est la valeur de la variable (Y) lors de la dernière itération,

   **caractérisé en ce que** :

   - le procédé comprend, antérieurement aux itérations successives, la détermination des nombres premiers ($p_k$) de la base (B) facteurs de l'exposant public (e), et **en ce que**
   - le procédé contourne une étape de calcul du plus grand dénominateur commun de la différence entre la variable (Y) et 1, et de l'exposant public (e) lorsque, lors d'une desdites itérations, au moins un parmi la pluralité de restes modulaires ($r_k$) associés auxdits nombres premiers ($p_k$) déterminés est égal à 1.

2. Procédé de génération selon la revendication 1, dans lequel l'élément (p) est généré et égal à la valeur de la variable (Y) correspondant à la dernière itération si ladite valeur de la variable (Y) est un nombre premier.

3. Procédé de génération selon la revendication 1 ou 2, dans lequel les nombres premiers ($p_i$) de la base (B) sont référencés par un indice (i) et dans lequel les indices (k) des nombres premiers ($p_k$) déterminés sont mémorisés dans un ensemble ($B_K$).

4. Procédé de génération selon l'une des revendications 1 à 3, comprenant, en outre, antérieurement aux itérations successives, la détermination d'un nombre résiduel (t) égal à 1 si l'ensemble des facteurs premiers de l'exposant public (e) correspondent aux nombres premiers déterminés ($p_k$), ou, sinon, égal à un facteur de l'exposant public (e) qui est premier avec chacun des nombres premiers ($p_k$) de l'ensemble ($B_K$).

5. Procédé de génération selon la revendication 4, **caractérisé en ce que**, lorsque le nombre résiduel (t) est égal à un facteur de l'exposant public (e) et est premier avec chacun des nombres premiers ($p_k$) de l'ensemble ($B_K$) et que le nombre résiduel (t) est inférieur à une borne supérieure ($B_T$), le nombre résiduel (t) est ajouté à la base (B).

6. Procédé de génération selon la revendication 5, dans lequel, lorsque le nombre résiduel (t) est premier, le procédé comprend une étape d'affectation de la valeur 1 au nombre résiduel (t).

7. Procédé de génération selon la revendication 4 ou 6, dans lequel, lors d'une desdites itérations, lorsque tous les restes modulaires ($r_k$) associés aux nombres premiers ($p_k$) facteurs de l'exposant public (e) dans la base (B) sont différents de 1 et lorsque le nombre résiduel (t) est égal à 1, le procédé contourne un calcul du plus grand dénominateur commun de la différence entre la variable (Y) et 1, et de l'exposant public (e).

8. Procédé de génération selon l'une des revendications 1 à 7, **caractérisé en ce que** la détermination des nombres premiers ($p_k$) facteurs de l'exposant public (e) dans la base (B) consiste au calcul de réductions modulaires de l'exposant public (e) modulo ($p_i$) pour chaque nombre premier ($p_i$) de la base (B) et à la comparaison du reste desdites réductions modulaires avec 0.

9. Procédé de génération selon l'une des revendications 1 à 8, dans lequel la variable (Y) est mise à jour à chaque itération.

10. Procédé de génération selon la revendication 9, dans lequel :

- à chaque itération, la variable (Y) est incrémentée d'un incrément (dY),
- lors de certaines au moins desdites itérations, la détermination d'une pluralité de restes modulaires ($r_i$) consiste en l'affectation, au reste modulaire courant ($r_i$), de la somme du reste modulaire courant ($r_i$) et du reste de l'incrément (dY) par ledit nombre premier ($p_i$) associé.

11. Procédé de génération d'un premier élément (p) et d'un second élément (q) d'une clé cryptographique comprenant un exposant public (e), dans lequel le premier élément (p) est généré selon un procédé de génération selon l'une des revendications 1 à 10, et le second élément (q) est généré selon un procédé de génération selon l'une des revendications 1 à 10.

12. Procédé de traitement cryptographique comprenant un procédé de génération d'un élément (p) d'une clé cryptographique, selon l'une des revendications 1 à 10.

13. Procédé de traitement cryptographique selon la revendication 12, comprenant une étape d'application, à des données, d'un algorithme cryptographique utilisant l'élément (p) généré.

14. Programme d'ordinateur comprenant des instructions exécutables par un processeur et adaptées pour la mise en oeuvre d'un procédé selon l'une des revendications 1 à 13, lorsque ces instructions sont exécutées par le processeur.

15. Dispositif de traitement cryptographique, comprenant une unité de génération d'un élément (p) d'une clé cryptographique, ladite clé cryptographique comprenant également un exposant public (e), ladite unité de génération étant conçue pour appliquer des itérations successives, de manière à ce qu'au moins le plus grand dénominateur commun de la différence entre une variable (Y) et 1 et de l'exposant public (e) soit égal à 1,

dans lequel ladite unité est conçue pour activer, à chaque itération, un bloc de détermination d'une pluralité de restes modulaires ($r_i$) associés chacun à un nombre premier ($p_i$) d'une base (B) d'une pluralité de nombre premiers ($p_i$), de telle

sorte que lesdits restes modulaires ($r_i$) sont égaux respectivement au reste de la variable (Y) modulo ledit nombre premier ($p_i$) associé, dans lequel ladite unité est conçue pour générer la valeur de la variable (Y) correspondant à la dernière itération en tant que l'élément (p), dans lequel ladite unité comprend un bloc de calcul du plus grand dénominateur commun de la différence entre la variable (Y) et 1 et de l'exposant public (e), **caractérisé en ce que** ladite unité est conçue pour activer, antérieurement auxdites itérations successives, un bloc de détermination des nombres premiers ($p_k$) facteurs de l'exposant public (e) dans la base (B), et **en ce que** la dite unité est conçue pour désactiver ledit bloc de calcul du plus grand dénominateur commun, lors de chaque itération où un parmi la pluralité de restes modulaires ($r_k$) associés auxdits nombres premiers ($p_k$) déterminés est égal à 1.

## Patentansprüche

1. Verfahren zur Generierung eines Elements (p) eines kryptographischen Schlüssels, wobei das Verfahren von einer elektronischen Einheit (1) durchgeführt wird, wobei der kryptographische Schlüssel ebenfalls einen öffentlichen Exponenten (e) enthält, wobei:

- das Verfahren die Anwendung von aufeinanderfolgenden Iterationen enthält, bis mindestens der größte gemeinsame Nenner der Differenz zwischen einer Variablen (Y) und 1 und des öffentlichen Exponenten (e) gleich 1 ist, wobei
- jede Iteration die Bestimmung einer Vielzahl von modularen Resten ($r_i$) enthält, die je einer Primzahl ($p_i$) einer Basis (B) einer Vielzahl von Primzahlen ($p_i$) zugeordnet sind, wobei die modularen Reste ($r_i$) je gleich dem Rest der Variablen (Y) Modulo die zugeordnete Primzahl ($p_i$) sind, und wobei
- das generierte Element (p) der Wert der Variablen (Y) bei der letzten Iteration ist,

**dadurch gekennzeichnet, dass**:

- das Verfahren vor den aufeinanderfolgenden Iterationen die Bestimmung der Primzahlen ($p_k$) der Basis (B) enthält, die Faktoren des öffentlichen Exponenten (e) sind, und dass
- das Verfahren einen Schritt zur Berechnung des größten gemeinsamen Nenners der Differenz zwischen der Variablen (Y) und 1, und des öffentlichen Exponenten (e) umgeht, wenn bei einer der Iterationen mindestens einer unter der Vielzahl von den bestimmten Primzahlen ($p_k$)

zugeordneten modularen Resten ($r_k$) gleich 1 ist.

2. Generierungsverfahren nach Anspruch 1, wobei das Element (p) generiert und gleich dem Wert der Variablen (Y) entsprechend der letzten Iteration ist, wenn der Wert der Variablen (Y) eine Primzahl ist.

3. Generierungsverfahren nach Anspruch 1 oder 2, wobei die Primzahlen ($p_i$) der Basis (B) mit einem Index (i) bezeichnet sind, und wobei die Indices (k) der bestimmten Primzahlen ($p_k$) in einer Gruppe ($B_K$) gespeichert werden.

4. Generierungsverfahren nach einem der Ansprüche 1 bis 3, das außerdem vor den aufeinanderfolgenden Iterationen die Bestimmung einer Restzahl (t) gleich 1 enthält, wenn die Gruppe der Primfaktoren des öffentlichen Exponenten (e) den bestimmten Primzahlen ($p_k$) entspricht, oder sonst gleich einem Faktor des öffentlichen Exponenten (e) ist, der mit jeder der Primzahlen ($p_k$) der Gruppe ($B_K$) teilerfremd ist.

5. Generierungsverfahren nach Anspruch 4, **dadurch gekennzeichnet, dass**, wenn die Restzahl (t) gleich einem Faktor des öffentlichen Exponenten (e) ist und teilerfremd mit jeder der Primzahlen ($p_k$) der Gruppe ($B_K$) ist, und die Restzahl (t) niedriger ist als eine Obergrenze ($B_T$), die Restzahl (t) der Basis (B) hinzugefügt wird.

6. Generierungsverfahren nach Anspruch 5, wobei, wenn die Restzahl (t) teilerfremd ist, das Verfahren einen Schritt der Zuweisung des Werts 1 zur Restzahl (t) enthält.

7. Generierungsverfahren nach Anspruch 4 oder 6, wobei bei einer der Iterationen, wenn alle den Primzahlen ($p_k$), die Faktoren des öffentlichen Exponenten (e) in der Basis (B) sind, zugeordneten modularen Reste ($r_k$) anders sind als 1, und wenn die Restzahl (t) gleich 1 ist, das Verfahren eine Berechnung des größten gemeinsamen Nenners der Differenz zwischen der Variablen (Y) und 1, und des öffentlichen Exponenten (e) umgeht.

8. Generierungsverfahren nach einem der Ansprüche 1 bis 7, **dadurch gekennzeichnet, dass** die Bestimmung der Primzahlen ($p_k$), die Faktoren des öffentlichen Exponenten (e) in der Basis (B) sind, aus der Berechnung von modularen Reduktionen des öffentlichen Exponenten (e) Modulo ($p_i$) für jede Primzahl ($p_i$) der Basis (B) und dem Vergleich des Rests der modularen Reduktionen mit 0 besteht.

9. Generierungsverfahren nach einem der Ansprüche 1 bis 8, wobei die Variable (Y) bei jeder Iteration aktualisiert wird.

10. Generierungsverfahren nach Anspruch 9, wobei:

  - bei jeder Iteration die Variable (Y) um ein Inkrement (dY) inkrementiert wird,
  - zumindest bei bestimmten der Iterationen die Bestimmung einer Vielzahl von modularen Resten ($r_i$) aus der Zuweisung, zum aktuellen modularen Rest ($r_i$), der Summe des aktuellen modularen Rests ($r_i$) und des Rests des Inkrements (dY) durch die zugeordnete Primzahl ($p_i$) besteht.

11. Generierungsverfahren eines ersten Elements (p) und eines zweiten Elements (q) eines kryptographischen Schlüssels, der einen öffentlichen Exponenten (e) enthält, wobei das erste Element (p) gemäß einem Generierungsverfahren nach einem der Ansprüche 1 bis 10 generiert wird, und das zweite Element (q) gemäß einem Generierungsverfahren nach einem der Ansprüche 1 bis 10 generiert wird.

12. Kryptographisches Verarbeitungsverfahren, das ein Generierungsverfahren eines Elements (p) eines kryptographischen Schlüssels nach einem der Ansprüche 1 bis 10 enthält.

13. Kryptographisches Verarbeitungsverfahren nach Anspruch 12, das einen Schritt der Anwendung, an Daten, eines kryptographischen Algorithmus unter Verwendung des generierten Elements (p) enthält.

14. Computerprogramm, das Anweisungen enthält, die von einem Prozessor ausführbar und für die Durchführung eines Verfahrens nach einem der Ansprüche 1 bis 13 geeignet sind, wenn diese Anweisungen vom Prozessor ausgeführt werden.

15. Kryptographische Verarbeitungsvorrichtung, die eine Einheit zur Generierung eines Elements (p) eines kryptographischen Schlüssels enthält, wobei der kryptographische Schlüssel ebenfalls einen öffentlichen Exponenten (e) enthält, wobei die Generierungseinheit konzipiert ist, aufeinanderfolgende Iterationen anzuwenden, damit mindestens der größte gemeinsame Nenner der Differenz zwischen einer Variablen (Y) und 1 und des öffentlichen Exponenten (e) gleich 1 ist,

  wobei die Einheit konzipiert ist, um bei jeder Iteration einen Bestimmungsblock einer Vielzahl von modularen Resten ($r_i$) zu aktivieren, die je einer Primzahl ($p_i$) einer Basis (B) einer Vielzahl von Primzahlen ($p_i$) zugeordnet sind, so dass die modularen Reste ($r_i$) gleich dem Rest der Variablen (Y) Modulo die zugeordnete Primzahl ($p_i$) sind,
  wobei die Einheit konzipiert ist, um den Wert der Variablen (Y) entsprechend der letzten Iteration als das Element (p) zu generieren,
wobei die Einheit einen Block zur Berechnung des größten gemeinsamen Nenners der Differenz zwischen der Variablen (Y) und 1 und des öffentlichen Exponenten (e) enthält, **dadurch gekennzeichnet, dass** die Einheit konzipiert ist, vor den aufeinanderfolgenden Iterationen einen Bestimmungsblock der Primzahlen ($p_k$), die Faktoren des öffentlichen Exponenten (e) in der Basis (B) sind, zu aktivieren,
und dass die Einheit konzipiert ist, um den Block zur Berechnung des größten gemeinsamen Nenners bei jeder Iteration zu deaktivieren, wo einer unter der Vielzahl von den bestimmten Primzahlen ($p_k$) zugeordneten modularen Resten ($r_k$) gleich 1 ist.

## Claims

1. Method for generating an element (p) of a cryptographic key, said method being implemented by an electronic entity (1), said cryptographic key also comprising a public exponent (e), wherein:

   - the method comprises applying successive iterations until at least the highest common denominator of the difference between a variable (Y) and 1 and of the public exponent (e) is equal to 1, wherein
   - each iteration comprises determining a plurality of modular remainders ($r_i$) which are each associated with a prime number ($p_i$) in a database (B) of a plurality of prime numbers ($p_i$), said modular remainders ($r_i$) being respectively equal to the remainder of the variable (Y) modulo said associated prime number ($p_i$), and wherein
   - the generated element (p) is the value of the variable (Y) during the last iteration,

   **characterized in that**:

   - the method comprises, prior to the successive iterations, determining the prime numbers ($p_k$) in the database (B) which are factors of the public exponent (e), and **in that**
   - the method bypasses a step of computing the highest common denominator of the difference between the variable (Y) and 1 and of the public exponent (e) when, during one of said iterations, at least one of the plurality of modular remainders ($r_k$) which are associated with said determined prime numbers ($p_k$) is equal to 1.

2. Generation method according to Claim 1, wherein the element (p) is generated and equal to the value of the variable (Y) corresponding to the last iteration if said value of the variable (Y) is a prime number.

3. Generation method according to Claim 1 or 2, wherein the prime numbers ($p_i$) in the database (B) are referenced by an index (i) and wherein the indices (k) of the determined prime numbers ($p_k$) are stored in a set ($B_K$).

4. Generation method according to one of Claims 1 to 3, further comprising, prior to the successive iterations, determining a residue number (t) to be equal to 1 if all of the prime factors of the public exponent (e) correspond to the determined prime numbers ($p_k$) or, otherwise, equal to a factor of the public exponent (e) which is prime with each of the prime numbers ($p_k$) in the set ($B_K$).

5. Generation method according to Claim 4, **characterized in that**, when the residue number (t) is equal to a factor of the public exponent (e) and is prime with each of the prime numbers ($p_k$) in the set ($B_K$) and when the residue number (t) is under an upper limit ($B_T$), the residue number (t) is added to the database (B).

6. Generation method according to Claim 5, wherein, when the residue number (t) is prime, the method comprises a step of assigning the value 1 to the residue number (t).

7. Generation method according to Claim 4 or 6, wherein, during one of said iterations, when all the modular remainders ($r_k$) associated with the prime numbers ($p_k$) which are factors of the public exponent (e) in the database (B) are different from 1 and when the residue number (t) is equal to 1, the method bypasses computing the highest common denominator of the difference between the variable (Y) and 1 and of the public exponent (e).

8. Generation method according to one of Claims 1 to 7, **characterized in that** determining the prime numbers ($p_k$) which are factors of the public exponent (e) in the database (B) consists in computing modular reductions of the public exponent (e) modulo ($p_i$) for each prime number ($p_i$) in the database (B) and in comparing the remainder of said modular reductions with 0.

9. Generation method according to one of Claims 1 to 8, wherein the variable (Y) is updated in each iteration.

10. Generation method according to Claim 9, wherein:

    - in each iteration, the variable (Y) is incremented by an increment (dY),
    - during at least some of said iterations, determining a plurality of modular remainders ($r_i$) consists in assigning, to the current modular remain-

der ($r_i$), the sum of the current modular remainder ($r_i$) and of the remainder of the increment (dY) by said associated prime number (Pi).

11. Method for generating a first element (p) and a second element (q) of a cryptographic key comprising a public exponent (e), wherein the first element (p) is generated according to a generation method according to one of Claims 1 to 10 and the second element (q) is generated according to a generation method according to one of Claims 1 to 10.

12. Cryptographic processing method comprising a method for generating an element (p) of a cryptographic key according to one of Claims 1 to 10.

13. Cryptographic processing method according to Claim 12, comprising a step of applying, to data, a cryptographic algorithm using the generated element (p).

14. Computer program comprising instructions which can be executed by a processor and are adapted to implement a method according to one of Claims 1 to 13 when these instructions are executed by the processor.

15. Cryptographic processing device, comprising a unit for generating an element (p) of a cryptographic key, said cryptographic key also comprising a public exponent (e), said generation unit being designed to apply successive iterations so that at least the highest common denominator of the difference between a variable (Y) and 1 and of the public exponent (e) is equal to 1,

  wherein said unit is designed to activate, in each iteration, a block for determining a plurality of modular remainders ($r_i$) which are each associated with a prime number ($p_i$) in a database (B) of a plurality of prime numbers ($p_i$), so that said modular remainders ($r_i$) are respectively equal to the remainder of the variable (Y) modulo said associated prime number ($p_i$),
  wherein said unit is designed to generate the value of the variable (Y) corresponding to the last iteration as the element (p),
  wherein said unit comprises a block for computing the highest common denominator of the difference between the variable (Y) and 1 and of the public exponent (e), **characterized in that** said unit is designed to activate, prior to said successive iterations, a block for determining the prime numbers ($p_k$) which are factors of the public exponent (e) in the database (B), and **in that** said unit is designed to deactivate said block for computing the highest common denominator, during each iteration in which one of the plurality of modular remainders ($r_k$) which are associated with said determined prime numbers ($p_k$) is equal to 1.

# Fig.1

# Fig.3

**Fig.2**

$B_K \leftarrow \{\varnothing\}$ — E0

$Y_0$ — E1

$dY$ — E2

$t \leftarrow e$ — E3

E4

E5

E40

$s_i \leftarrow dY \bmod p_i$ — E6

$Y \leftarrow Y_0$ — E8

$r_i \leftarrow dY \bmod p_i$ — E10

P

$r_i = 0?$ or $r_k = 1?$ — E14

N

E16

P — $t=1?$ — E161

E163    P — PGCD=1? — E162

E17    P    N

Return P    Yprime?    N

E18

$Y \leftarrow Y+dY$ — E20

$r_i \leftarrow r_i+s_i$ — E22

N — $Y<B_Y$ — E19

E1    P

## Fig.4

## Fig.5

**EP 4 117 224 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2020044861 A1
- US 2002174155 A1

- JP 2013113978 A

**Littérature non-brevet citée dans la description**

- Information Technology Laboratory National Institute of Standards and technology. Digital Signature Standard (DSS). Technical Report. *FEDERAL IN-FORMATION PROCESSING STANDARDS PUBLI-CATION,* Juillet 2013